# NEW EUROPEAN PATENT SPECIFICATION

(11) **EP 0 674 445 B2**
(45) Date of publication and mention of the opposition decision: **05.03.2003**
(45) Mention of the grant of the patent: 21.06.2000
(21) Application number: 95104318.1
(22) Date of filing: 23.03.1995
(51) Int. Cl.: H04N 7/50, H04N 5/92

(54) **Moving picture decoding device**
Bewegtbilddekodierer
Dispositif pour le décodage d'images animées

(30) Priority: 23.03.1994 JP 5186794
(43) Date of publication of application: 27.09.1995
(73) Proprietor: PIONEER ELECTRONIC CORPORATION, Meguro-ku Tokyo-to (JP)
(72) Inventor: Kuroda, Kazuo, c/o Pioneer Electronic Corp., Tokorozawa-shi, Saitama-ken (JP); Okano, Takashi, c/o Pioneer Electronic Corp., Tokorozawa-shi, Saitama-ken (JP)
(74) Representative: Grünecker, Kinkeldey, Stockmair & Schwanhäusser Anwaltssozietät

(56) References cited:
- EP-A- 0 545 323
- US-A- 5 267 334

## Description

This invention relates to a recently proposed moving picture coding system for storage media which handles digital moving picture, and more particularly to a technique of decoding and reproducing moving picture for special reproduction mode such as reverse reproduction.

### Description of the Prior Art:

Recently, various systems for compressing and expanding digital moving picture have been proposed in accompany with development of multi-media technique. Digital moving picture compressed by those techniques are expanded (decoded or restored) by conducting interpolation on plural original frame pictures and predicting movement of picture to produce predictive picture, thereby compensating for deficiency in information quantity of original pictures. Particularly, a system proposed in MPEG (Moving Picture Coding Experts Group) which is an international standardization conference of moving picture coding for storage media (hereinafter referred to as "MPEG system") is standardized in consideration of special mode reproduction such as random access or reverse reproduction.

Generally, in moving picture, contents of successive frame pictures are analogous to each other. Taking this into consideration, the moving picture coding technique produces intermediate picture between original pictures by interpolation. The MPEG system also relates to the interpolation technique. In the following, description will be given by taking the MPEG system as representative of such compressing and expanding systems of digital moving picture.

The moving picture coding system for storage media utilizes random-accessible media such as CD-ROM as the storage media. Namely, compressed data of original pictures are recorded on such a storage media. A decoding device of the coded moving picture reads out the compressed data of original pictures from the storage media and carries out digital signal processing including interpolation for producing intermediate pictures between the original pictures. Then, the device stores the interpolated (predicted) pictures in a memory, and outputs the stored pictures in succession as moving picture. Data structure of MPEG system is of hierarchical structure, and includes video-sequence stage, GOP (Group Of Picture) stage which can be individually reproduced, picture stage for predicting picture information including luminance and color differences, slice stage of scanning order, macro-block stage of luminance and color difference blocks of right-left and up-down directions, block stage including 8-lines x 8-pixels of luminance and color differences. The decoding device performs prediction of picture, from the compressed pictures read out from the storage medium, utilizing Motion Compensation (MC) and Discrete Cosine Transform (DCT) between frame pictures having periodical intervals, and produces predictive pictures. Thus, the coding device stores decoded pictures by GOP units in a memory device in normal order, and then outputs them.

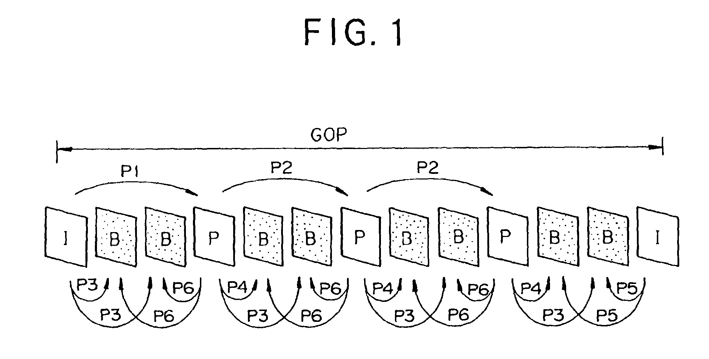

In order to demonstrate concept of predictive pictures, prediction of picture will be described below. FIG. 1 is a diagram illustrating pictures including predictive pictures in bit-stream of MPEG system. FIG. 1 shows frame pictures, and each of the frames corresponds to a picture stage in the data structure. Picture represented by the reference I is I-picture (Intra-coded picture) which constitutes a single picture by itself. Picture represented by the reference P is P-picture (predictive-coded picture) which is a predictive picture produced by prediction utilizing I-picture and other P-picture of past in reproduction sequence. Picture represented by the reference B is B-picture (Bidirectionally predictive-coded picture) which is produced by prediction utilizing not only I-picture and P-picture of past in reproduction sequence but I-picture and P-picture of future. The pictures shown in FIG. 1 constitute GOP stage. The pictures shown in FIG. 1 are decoded and produced by predictions in the order of P1, P2, P3, ..., P6. Namely, P-pictures are firstly produced using I-pictures and P-pictures by steps of P1 and P2, and then B-pictures are produced using the I-pictures and P-pictures by steps P3, P4, .., P6. In this manner, pictures in a GOP are produced. Then, the decoding device stores the pictures thus produced, and reads them out in normal order. Such a technique is disclosed in Japanese Patent Application Laid-Open No. 5-176694.

On the other hand, when reverse reproduction is needed, the pictures of a GOP are produced and stored in the same manner, and then reproduced in reversed order. However, in order to carry out reverse reproduction in this manner, the decoding device should have memory of large capacity, which is relatively expensive. Namely, the decoding device produces plural pictures from one I-picture to next I-picture by GOP units, and stores all of the pictures in the memory. Then, the device reads out and displays the stored pictures one by one in an order reverse to the normal reproduction order. Therefore, the device is required to store the predicted, non-compressed pictures for many frames. In order to achieve slow reverse reproduction (reverse reproduction slower than normal speed), frame memory having storage capacity of at least 15 frames is required. Since approximately 2Mbits of storage capacity is necessary for storing picture of one frame, the device should have large memory having capacity of 30Mbits (for 15 frames). In this view, it is impossible, in practice, to achieve reverse reproduction by device of reasonable cost. In addition, storage of all frame pictures in GOP requires long period of time. However, in the field of digital moving picture compressing and expanding technique in which it is expected that special reproduction such as random-accessing, high-speed reproduction or reverse reproduction is readily and rapidly carried out, it is not preferable that storage of pictures takes such a long time.

EP 0545323 A1 discloses a similar system. Means are provided receiving digital picture data in a forward reproduction order. This data is stored in a buffer until it is read. When reverse reproduction is instructed, the I-picture data is read from the recording medium, is decoded, and is stored in a frame memory. Then, P-frames are produced and stored in the frame memory in the same manner. Thereafter, frame pictures thus produced and stored in the frame memory are output in the reverse order. Hence, the frame memory has a capacity large enough to store multiple frame pictures. If high reproduction speed is desired, B-pictures are omitted from being decoded.

It is an object of the present invention to provide a moving picture decoding device capable of performing reverse reduction rapidly using a memory of small capacity.

This object is achieved with a moving picture decoding device having the features of claim 1.

According to the moving picture decoding device of the present invention, the receiving unit receives compressed picture data from a storage medium such as a CD or the like in a forward order, i.e., normal reproduction order, and the storing unit stores the compressed picture data corresponding to a predetermined reproducing time period, e.g., for several frames, from a picture being currently reproduced. The producing unit produces intermediate pictures of the compressed picture data by picture predictions using the compressed picture data stored in the storing unit, so that reproduction pictures to be successively reproduced are prepared. The designating unit determines output timings of the reproduction pictures and the outputting unit outputs the reproduction pictures successively at the output timings so that moving picture is reproduced. When user instructs reverse reproduction, the producing unit produces the reproduction pictures in an order reverse to the forward order, and outputs the produced reproduction pictures one after another in the reverse order. Thus, reverse reproduction is carried out. Since storing unit, such as memory, stores not all reproduction pictures but only the compressed picture data, reverse reproduction can be performed with memory of small capacity.

The nature, utility, and further features of this invention will be more clearly apparent from the following detailed description with respect to preferred embodiment of the invention when read in conjunction with the accompanying drawings briefly described below.
FIG. 1 is a diagram illustrating pictures including predictive pictures in bit-stream of MPEG system;
FIG. 2 is a block diagram illustrating a construction of moving picture decoding device according to the present invention;
FIG. 3 is a flowchart illustrating an operation of moving picture decoding device of the present invention;
FIG. 4 is a diagram illustrating a manner of producing pictures by the moving picture decoding device of the invention; and
FIG. 5 is a diagram illustrating the operation performed along the flowchart shown in FIG. 3.

A preferred embodiment of the present invention will be described below with reference to the accompanying drawings.

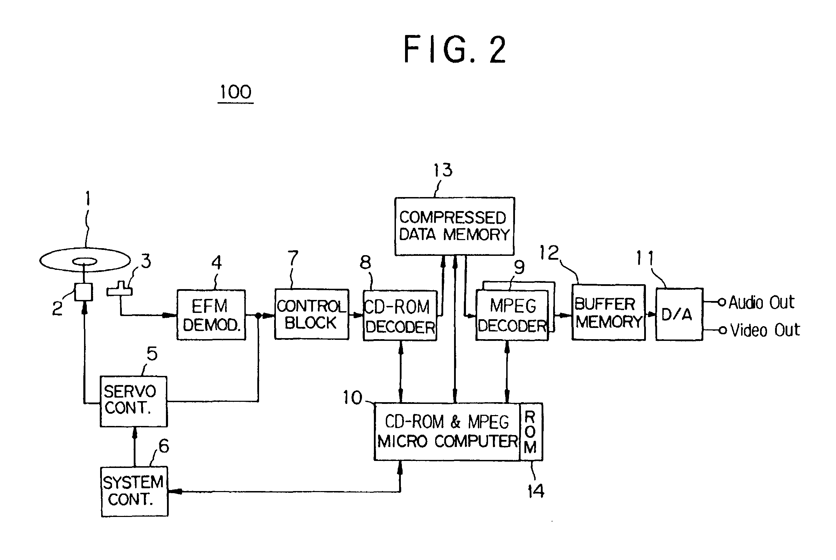

FIG. 2 is a block diagram illustrating a construction of moving picture decoding device according to the present invention. As illustrated, the moving picture decoding device includes a CD (Compact Disc) 1, a spindle motor 2, an optical pickup 3, an EFM demodulation circuit 4, a servo control circuit 5, a system control circuit 6, a control block 7, a CD-ROM decoder 8, a MPEG decoder 9, a micro-computer 10, a D/A converter 11, a buffer memory 12 and a compressed data memory 13. The CD 1 records compressed data of pictures, and the spindle motor 2 rotates the CD 1. The servo control circuit 5 and the system control circuit 6 control reproduction of picture data from the CD 1, and the pickup 3 reads out picture data from the CD 1 and outputs RF signal. The EFM demodulation circuit 4 conducts EFM demodulation onto the RF signal, and the control block 7 performs error correction based on parity data outputted from the EFM demodulation circuit 4. The CD-ROM decoder 8 decodes compressed picture data and audio data, and the compressed data memory 13 stores compressed data of plural frames within a period from an I-picture to next I-picture (i.e., pictures in a GOP). The MPEG decoder 9 decodes data read-out from the compressed data memory 13 according to MPEG system. The buffer memory 12 temporarily stores decoded picture data, and the D/A converter 11 converts picture and audio data from the buffer memory 12 into analog picture and audio signal. The micro-computer 10 totally control-whole system. An internal memory of the MPEG decoder 9 may be used as the buffer memory 12. That is, by using MPEG decoder having internal buffer memory, both decoding function and timing adjusting function can be performed by the MPEG decoder 9. A ROM 14 is connected to the micro-computer 10, and the ROM 14 stores information of timings at which the MPEG decoder 9 supplies data to the buffer memory 12.

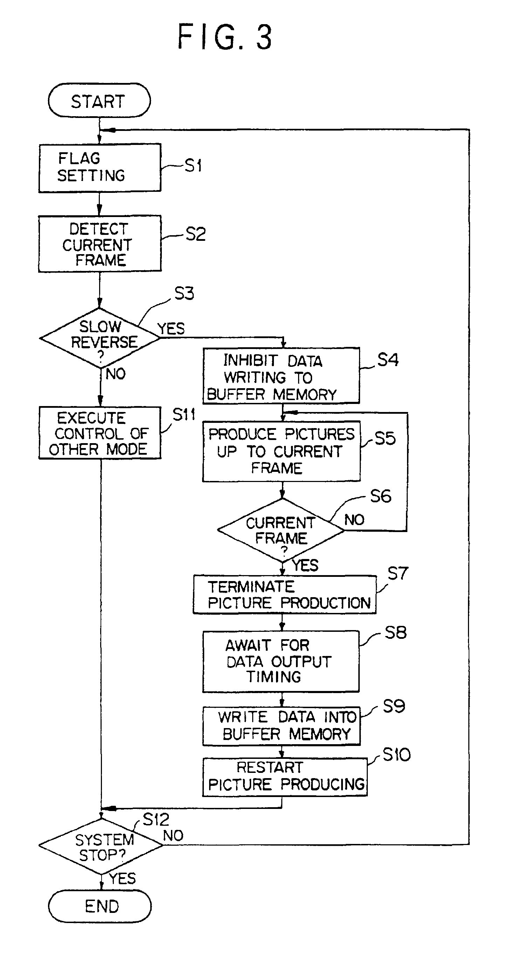

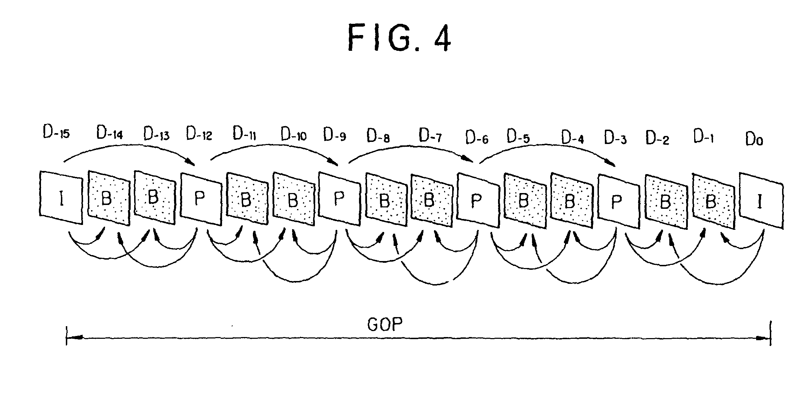

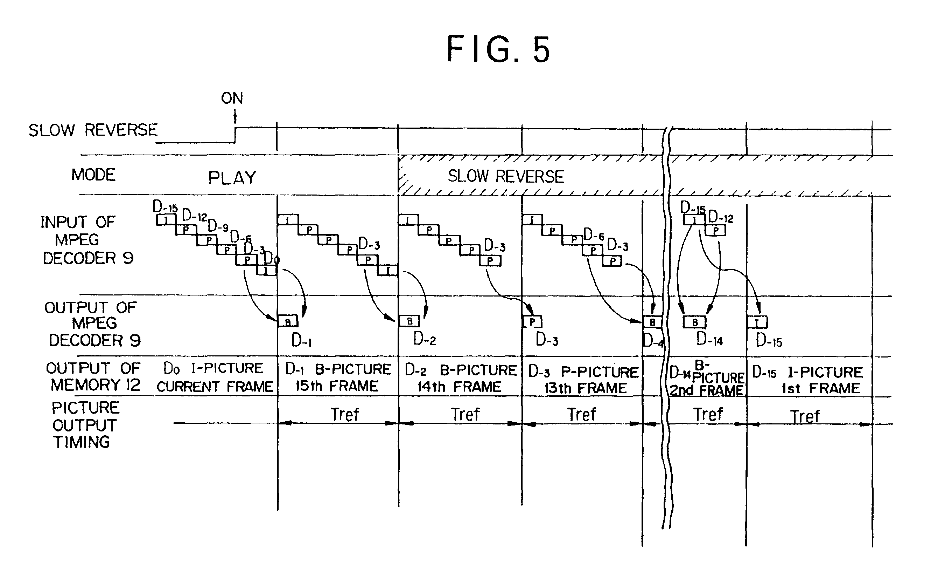

Next, an operation of the moving picture decoding device 100 will be described along the flowchart of FIG. 3, with occasionally referring to FIGS. 4 and 5. Compressed data read out from the CD 1 and decoded by the CD-ROM decoder 9 (generally referred to as "MPEG bit stream") is stored in the compressed data memory 13. In normal reproduction of forward direction, this compressed data is supplied to the MPEG decoder 9, and the MPEG decoder 9 generates predictive pictures. The predictive pictures thus produced are outputted by the D/A converter 11 in a form of analog signal. Therefore, in normal reproduction, the pictures including predictive pictures are displayed on a monitor or the like in forward reproduction order.

Next, operation of reverse reproduction will be described. Now, assuming that user instructs slow reverse reproduction by manipulation of operation panel or the like, the system control circuit 6 supplies a command indicating that special reproduction is instructed to the micro-computer 10. The micro-computer 10 detects and recognizes frame of picture being currently supplied to the MPEG decoder 9, and executes flag setting necessary for special reproduction (step S1). Then, the micro-computer 10 detects frame picture being currently outputted (hereinafter referred to as "current frame") by referring to number of the frame or the like (step S2). In this case, the current frame is D₀, as shown in FIGS. 4 and 5. Then, the micro-computer 10 judges whether the special reproduction instructed by the user is slow reverse reproduction or not (step S3), and, if not, executes operation of other reproduction such as high speed reproduction, etc (step S11). If the micro-computer 10 recognizes that the command indicates slow reverse reproduction (step S3: YES, FIG. 5: slow reverse ON), the micro-computer 10 inhibits writing picture data into the buffer memory 12 so as to terminate picture display of normal reproduction mode (step S4). Then, the MPEG decoder 9 starts producing pictures including predictive pictures for at least one GOP (i.e., D₀ to D₋₁₅) from the current frame D₀ in reversed order of normal reproduction. Now, assuming that the compressed data memory 13 retains picture data of I-picture D₋₁₅ and P-pictures D₋₁₂, D₋₉, D₋₆ and D₋₃, the MPEG decoder 9 produces successive pictures including B-pictures by predictions (step S5). Namely, the MPEG decoder 9 produces B-pictures D₋₁₄ and D₋₁₃ using P-picture D₋₁₂ and I-picture D₋₁₅, and subsequently produces B-pictures D₋₁₁ and D₋₁₀ using P-pictures D₋₉ and D₋₁₂. In this manner, the MPEG decoder 9 produces pictures D₋₁₅ to D₋₁. When pictures up to the current frame (D₀ in this case) are produced (step S6:YES), production of pictures is terminated (step S7). During the picture production, those pictures are not displayed and the picture of the frame D₀ is continuously displayed because data writing into the buffer memory 12 has been inhibited (see. step S4). Subsequently, reverse reproduction is started. The micro-computer 10 determines timings for writing picture data into the buffer memory 12 according to the reverse reproduction in consideration of the time period (reference time period T_{ref}) required for changing displayed picture from D₀ to D₋₁ (step S8). Namely, the micro-computer 10 sets the interval of outputting the pictures to the time period T_{ref} (see. FIG. 5:picture output timing). When the picture D₋₁ is outputted by the MPEG decoder 9, the micro-computer 10 releases the inhibition of data writing to the buffer memory 12. Thereby, picture D₋₁ is displayed (step S9). Then, the MPEG decoder restarts picture production in order to produce and display next picture (i.e., D₋₂). First, the micro-computer 10 checks whether termination of the system has been instructed or not (step S12), and, if not, repeats steps S1 to S8. Namely, the MPEG decoder 9 produces pictures from D₋₁₅ up to D₋₂ this time, and displays the picture D₋₂ (step S9). In this manner, steps S1 to S12 are repeated and pictures are displayed one by one in the reversed order D₋₁, D₋₂, ..., until the picture D₋₁₅ is displayed. As a result, pictures D₋₁ to D₋₁₅ are displayed in the reversed order. It should be noted that, in step S6 of each repetitions of steps S1 to S12, current frame is renewed one frame prior. Namely, the current frame is D₀ at the start of the reverse reproduction and changes to D₋₁, D₋₂, ..., D₋₁₅ at every repetitions of steps S1 to S12.

In the above processing, time periods required for producing pictures up to the current frame D₋₁, D₋₂, ... are different, respectively. For example, producing P-picture D₋₃ takes shorter period of time than producing B-pictures D₋₂ or D₋₁. However, since the micro-computer 10 controls timings of writing picture data into the buffer memory 12 so that picture data is written in to the buffer memory 12 with a constant interval T_{ref} as described above, the pictures D₋₁ to D₋₁₅ are displayed with constant time intervals (i.e., at constant speed) in the reverse reproduction. Therefore, slow reverse reproduction is performed naturally for watchers.

FIG. 5 is a diagram illustrating the operation performed along the flowchart described above, with emphasizing input and output data of the MPEG decoder 9. Namely, B-picture data D₋₁ of 15th frame (in normal reproduction order) is produced using picture data D₋₃ and current data D₀, and B-picture data D₋₂ of 14th frame is produced using the same data D₋₃ and D₀. In this manner, picture data D₋₁ to D₋₁₅ are produced and displayed in succession. If the slow reverse reproduction is continued after the display of the picture D₋₁₅ and hence data stored in the compressed data memory 13 becomes insufficient to continue the slow reverse reproduction (e.g., the picture D₋₁₅ has already been displayed and slow reverse reproduction is further continued), data prior to the picture D₋₁₅ is read out from the CD 1, and the same operation is repeated. Until user instructs termination of slow reverse reproduction (step S12:YES), the device 100 continues the slow reverse reproduction.

According to the above embodiment, compressed picture data is stored in the compressed data memory and picture data is produced using the stored compressed data when slow reverse reproduction is instructed. Namely, it is unnecessary to store all frame pictures including predictive pictures produced from the compressed pictures, and it is necessary to store only the compressed picture data smaller in data capacity than the predictive pictures. Therefore, memory capacity of the device can be saved. In addition, moving picture can be rapidly reproduced in reverse direction because it is unnecessary to read out respective pictures from memory of large storage capacity.

### Modifications:

The present invention is not limited to the above described feature and may be modified in other various forms. In the above described embodiment, frame picture D₋₁ is displayed after successively producing frame pictures D₋₁₅, D₋₁₄, ..., D₋₂. However, when reverse reproduction of higher speed (quick reverse reproduction) is needed, production of B-pictures may be omitted and only P-pictures and I-pictures may be displayed in the manner of D₋₁₅ (I-picture), D₋₁₂ (P-picture), D₋₉ (P-picture), D₋₆ (P-picture), D₋₃ (P-picture), thereby quick reverse reproduction can be achieved. In this case, time period required for producing and displaying picture D₋₁ is used as reference interval T_{ref} for displaying each pictures.

In the above described embodiment, reproduction speed of slow reverse reproduction is equal to that of normal reproduction. However, reverse reproduction of slower speed (1/2, 1/4 or 1/16 ... of normal speed) may be performed when data writing interval into the buffer memory 12 designated by the micro-computer 10 is determined longer. Further, using the same technique, reverse reproduction in higher speed (twice, 3 times, ... of normal speed) may be performed. Further, special reproduction of other type can be achieved using the concept of this invention. Namely, by producing predictive pictures using compressed data stored in the compressed data memory and varying manners and timings of supplying the produced pictures, special reverse reproduction such as display of picture of past reproduction, extra-slow reproduction, stroboscopic reproduction or repetitive reproduction can be carried out. In the above description, CD is used as storage device, however, DAT (Digital Audio Tape) or harddisk can be alternatively used. Further, the compressed data memory 13, provided between the CD-ROM decoder 8 and the MPEG decoder 9 in the above embodiment, may be provided between the control block 7 and the CD-ROM decoder 8.

As described above, according to the present invention, special reproduction of moving picture can be performed using memory of small capacity. In addition, since frame pictures are displayed, in the reverse reproduction, with a constant time intervals, the reverse reproduction can be naturally carried out. Further, by omitting display of B-pictures, quick reverse reproduction can be achieved.

The invention may be embodied on other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning an range of equivalency of the claims are therefore intended to be embraced therein.

## Claims

1. Moving picture decoding device **characterized by**:
means (8) for successively receiving compressed digital picture data in a forward reproduction order;
means (13) for constantly storing the compressed picture data of a GOP, comprising picture data from an I-picture to the next I-picture in an amount corresponding to a predetermined reproduction time period from a currently reproduced picture on;
means (9) for producing reproduction pictures including intermediate pictures (P,B), In time, of the compressed picture data by picture predictions using the compressed picture data stored in the storing means;
means (10) for designating outputtimings of the reproduction pictures; and
means (11,12) for successively outputting the reproduction pictures at the output timings designated by the designating means so as to form moving picture, wherein said producing means produces the reproduction pictures in an order reverse to the forward reproduction order using the compressed picture data (D-15 to DO) of the GOP, stored in said storing means and performing repeated partial forward reproduction within said GOP up to a picture to be displayed and said outputting means outputs the reproduction pictures in the reverse order, when reverse order reproduction is instructed.

2. Device according to claim 1, **characterized in that** said designating means designates output timings to have a constant time intervals therebetween.

3. Device according to claim 1, **characterized in that** said outputting means continuously outputs, after the instruction of the reverse reproduction, afirst reproduction picture (D₀) being reproduced at the time when the reverse reproduction is instructed until a reproduction picture (D₋₁) just prior, in time, to the first reproduction picture is produced and outputted.

4. Device according to claim 1, **characterized in that** said compressed picture data comprises I-picture data of MPEG system, said reproduction picture comprises B-picture of MPEG system, and said outputting means inhibits output of the B-picture data after the reverse reproduction is instructed.

5. Device according to claim 1, **characterized in that** said designating means determines, as the constant time interval, a longest one (T_{ref}) of time periods required for producing each of the reproduction pictures.

## Patentansprüche

1. Laufbild-Dekodiervorrichtung mit
einer Einrichtung zum aufeinanderfolgenden Empfangen komprimierter digitaler Bilddaten in einer vorwärts gerichteten Reproduktions-Reihenfolge;
einer Einrichtung (13) zum beständigen Speichern der komprimierten Bilddaten einer GOP, die Bilddaten von einem I-Bild zum nächsten l-Bild umfasst, in einer Menge, die einer vorbestimmten Reproduktions-Zeitspanne von einem gegenwärtig reproduzierten Reproduktionsbild an entspricht;
einer Einrichtung (9) zum zeitgerechten Erzeugen von Reproduktionsbildem einschließlich Zwischenbildem (P, B), aus den komprimierten Bilddaten durch Bildvoraussagen, welche die in der Speichereinrichtung 813) gespeicherten komprimierten Bilddaten verwenden;
einer Einrichtung (10) zum Bestimmen der Ausgabezeiten der Reproduktionsbilder; und
einer Einrichtung (11, 12) zum aufeinanderfolgenden Ausgeben der Reproduktionsbilder an den durch die Bestimmungseinrichtung (10) bestimmten Ausgabezeiten, um so Laufbilder zu erzeugen, wobei die Erzeugungseinrichtung (9) die Reproduktionsbilder in einer zu der vorwärts gerichteten Reproduktions-Reihenfolge umgekehrten Reihenfolge unter Verwendung der komprimierten Bilddaten (D-15 bis DO) der GOP, die in der Speichereinrichtung gespeichert sind, und Ausführung wiederholter teilweiser vorwärts gerichteter Reproduktion innerhalb der GOP bis zu einem anzuzeigenden Bild, erzeugt und die Ausgabeeinrichtung die Reproduktionsbilder in der umgekehrten Reihenfolge ausgibt, wenn die Reproduktion umgekehrter Reihenfolge vorgegeben wird.

2. Dekodiervorrichtung nach Anspruch 1, **dadurch gekennzeichnet, dass** die Bestimmungseinrichtung (10) Ausgabezeiteinstellungen so bestimmt, dass konstante Zeitintervalle dazwischen liegen.

3. Dekodiervorrichtung nach Anspruch 1, **dadurch gekennzeichnet, dass** die Ausgabeeinrichtung (11), nach der Anweisung zur umgekehrten Reproduktion, fortlaufend ein erstes Reproduktionsbild (D₀) ausgibt, das zu dem Zeitpunkt reproduziert wurde, an dem die umgekehrte Reproduktion angewiesen worden ist, bis ein Reproduktionsbild (D₋₁) zeitlich direkt vor dem ersten Reproduktionsbild erzeugt und ausgegeben wird.

4. Dekodiervorrichtung nach Anspruch 1, **dadurch gekennzeichnet, dass** die komprimierten Bilddaten I-Bilddaten des MPEG-Systems umfassen, das Reproduktionsbild B-Bilder des MPEG-Systems umfasst und die Ausgabeeinrichtung (11) die Ausgabe der B-Bilddaten sperrt, nachdem die umgekehrte Reproduktion angewiesen worden ist.

5. Dekodiervorrichtung nach Anspruch 1, **dadurch gekennzeichnet, dass** die Bestimmungseinrichtung (10) als das konstante Zeitintervall die längste (T_{ref}) der Zeitspannen bestimmt, die zum Erzeugen jedes der Reproduktionsbilder benötigt werden.

## Revendications

1. Dispositif de décodage d'image mobile, **caractérisé par** :
un moyen (8) pour recevoir successivement des données d'image numérique comprimées selon un ordre de reproduction en sens direct ;
un moyen (13) pour stocker constamment les données d'image comprimées d'un GOP, comprenant des données d'image depuis une image I jusqu'à l'image l suivante, selon une quantité correspondant à une période temporelle de reproduction prédéterminée depuis une image reproduite présentement ;
un moyen (9) pour produire des images de reproduction incluant des images intermédiaires (P, B), en séquence temporelle, des données d'image comprimées au moyen de prédictions d'image en utilisant les données d'image comprimées stockées dans le moyen de stockage ;
un moyen (10) pour désigner des cadencements de sortie des images de reproduction ; et
un moyen (11, 12) pour émettre en sortie successivement les images de reproduction aux cadencements de sortie désignés par le moyen de désignation de manière à former une image mobile, où ledit moyen de production produit les imagés de reproduction selon un ordre inverse de l'ordre de reproduction en sens direct en utilisant les données d'image comprimées (D₋₁₅ à D₀) du GOP, stockées dans ledit moyen de stockage et en réalisant une reproduction en sens direct partielle répétée à l'intérieur dudit GOP jusqu'à une image à déplacer, et ledit moyen de sortie émet en sortie les images de reproduction selon Perdre inverse, lorsqu'une reproduction en ordre inverse est demandée en instruction.

2. Dispositif selon la revendication 1, **caractérisé en ce que** ledit moyen de désignation désigne des cadencements de sortie de telle sorte que des intervalles temporels constants les séparent.

3. Dispositif selon la revendication 1, **caractérisé en ce que** ledit moyen de sortie émet en sortie en continu, après l'instruction de reproduction en sens inverse, une première image de reproduction (D₀) qui est reproduite à l'instant où la reproduction en sens inverse est demandée en instruction jusqu'à ce qu'une image de reproduction (D₋₁) juste avant, en séquence temporelle, la première image de reproduction soit produite et émise en sortie.

4. Dispositif selon la revendication 1, **caractérisé en ce que** lesdites données d'image comprimées comprennent des données d'image I du système MPEG, ladite image de reproduction comprend une image B du système MPEG et ledit moyen de sortie inhibe la sortie des données d'image B après que la reproduction en sens inverse est demandée en instruction.

5. Dispositif selon la revendication 1, **caractérisé en ce que** ledit moyen de désignation détermine, en tant qu'intervalle temporel constant, la plus longue (T_{ref}) de périodes temporelles requises pour produire chacune des images de reproduction.
